# EUROPEAN PATENT SPECIFICATION

(11) **EP 1 061 764 B1**
(45) Date of publication and mention of the grant of the patent: **05.01.2011**
(21) Application number: 00305047.3
(22) Date of filing: 14.06.2000
(51) Int. Cl.: H04Q 11/00, H04J 14/02, H04B 10/20

(54) **Method of controlling access in an information network**
Verfahren zur Steuerung des Zugriffs in einem Informationsnetzwerk
Procédé de contrôle d'accès dans un réseau d'informations

(30) Priority: 15.06.1999 GB 9913859
(43) Date of publication of application: 20.12.2000
(73) Proprietor: Alcatel-Lucent USA Inc., Murray Hill, New Jersey 07974 (US)
(72) Inventor: Wellen, Jeroen Siebrand, 3833 VP Leusden (NL)
(74) Representative: Sarup, David Alexander

(56) References cited:
- EP-A- 0 691 760
- FRANSSON J ET AL: "DESIGN OF A MEDIUM ACCESS CONTROL PROTOCOL FOR A WDMA/TDMA PHOTONICRING NETWORK" 8 November 1998 (1998-11-08), IEEE GLOBECOM 1998. GLOBECOM '98. THE BRIDGE TO GLOBAL INTEGRATION. SYDNEY, NOV. 8 - 12, 1998; [IEEE GLOBAL TELECOMMUNICATIONS CONFERENCE], NEW YORK, NY : IEEE, US, PAGE(S) 307 - 312 , XP000894320 ISBN: 978-0-7803-4985-8 * the whole document *
- CASALS O ET AL: "A MEDIUM ACCESS CONTROL PROTOCOL FOR AN ATM ACCESS NETWORK" IFIP TRANSACTIONS C. COMMUNICATIONS SYSTEMS, ELSEVIER SCIENCE B.V., AMSTERDAM, NL, vol. C-21, 1 October 1993 (1993-10-01), pages 289-308, XP000997513 ISSN: 0926-549X

## Description

### Background of the Invention

The present invention relates to a method of controlling access in an information network in which a primary network node is connected to a number of secondary network nodes through a medium which is shared among at least part of the secondary network nodes wherein information is exchanged between the primary network node and the secondary network nodes, the secondary network nodes are capable of sending information transfer requests to a network controller for transferring an amount of information to the primary network node, and wherein the network controller is capable of issuing information transfer permits to the secondary network nodes permitting the secondary network nodes to send information to the primary network node.

Information networks gain importance in nowadays society with the steady growing popularity and penetration rate of the Internet, apart from being hardly indispensable in a modern office or other business environment. There seems to be a general trend in these networks of an ever increasing demand of bandwidth by the network users, while on the other hand the number of users sharing the same physical network generally rather tends to grow than to decrease. Moreover, old and emerging data and communication services, employing a variety of quality classes, demand different priority levels for transport through the network. All these developments require a method of the kind described in the opening paragraph for controlling access to the network resources, which are shared among the users in an efficient and robust way.

For downstream traffic, multiplexing techniques are often used in order to accommodate data intended for different recipients on a single transport medium. A widely used technique in this respect is Time Division Multiplexing Access (TDMA) for controlling traffic. The information is thereby segmented in separate cells of fixed length, each incorporating header information about the addressed recipient. These cells are fed over the shared medium in a consecutive fashion and broadcast to all recipients in the network or in a group of recipients of the network. At the recipient side, the appropriate cells are extracted from the information stream and decoded. Although this might work satisfactorily in the downstream direction, in the upstream direction the danger exists that different transmitters intend to use the medium at the same time, causing loss of the data. To avoid this, a method is necessary to control the transmission of the individual transmitters across the medium such that collisions between data cells from different sources are avoided as much as possible.

A method of the kind described in the opening paragraph provides for such control and is described in a paper of the Proceedings of the RACE Open Workshop on Broadband Access by J. Carcia et al. entitled 'A Cell Based MAC Protocol with Traffic Shaping and a Global FIFO Strategy', held in Nijmegen, The Netherlands, June 1993. The method described in this paper is based on a sophisticated ATM (Asynchronous Transfer Mode) scheme of transfer requests and transfer permits for data traffic in a passive optical network (PON) featuring a tree structure with a shared medium. The secondary network nodes, designated as Network Terminations (NT), advertise their bandwidth need by means of requests, which are sent to a Medium Access Controller (MAC). The MAC allocates dynamically the available upstream bandwidth to the various NT's by means of a well known bandwidth allocation algorithm, if desired taking into account specific priority parameters. The NT's are informed about the allocated bandwidth by means of information transfer permits, which are issued by the controller to the NT's. When an NT receives a permit, it is allowed to send one ATM cell upstream. The controller thereby implicitly designates a time slot for each cell to be sent upstream, which should avoid collisions.

Although this known method provides a solution for sharing a single connection between a primary network node and several secondary network nodes, it fails if more shared media paths are involved, as there is no synchronisation among information streams along such separate media paths in the known method. The known method requires a fixed allocation of media paths to groups of network users, which leads in practice to a less than optimal balance between requested and available bandwidth.

Moreover the known method, for the same reason, does not provide for protection switching. Complex communication systems may exhibit failures due to malfunctioning of network components, cable fractures etc. It is important that these kinds of failures do not affect the users in the network. Connections experiencing a particular fault should be automatically by-passed if possible. This process is called protection switching. The known method does not address this requirement.

It is an object of the present invention to provide for a method of the kind described in the opening paragraph, which at least partially overcomes these shortcomings of the known method.

Technical background is provided by European patent publication EP-A-0691760 and a paper by Fransson J Et Al entitled "Design Of A Medium Access Control Protocol For A WDKIA/MMA Photonicring Network" 8 November 1998 (1998-11-08), IEEE Globecom 1998. Globecom '98. The Bridge To Gobal Integration. Sydney, Nov. 8 - 12, 1998; [IEEE Global Telecommunications Conference], New York, NY : IEEE, US, pages(s) 307 - 312, XP000894320 ISBN: 978-0-7803-4985-8.

It is known from the above mentioned Fransson paper to provide a method of controlling access in an information network in which a primary network node is connected to a plurality of secondary network nodes through a medium which is shared among the secondary network nodes wherein information is exchanged between the primary network node and the secondary network nodes, the secondary network nodes arc capable of sending information transfer requests to a network controller for transferring an amount of information to the primary network node, and wherein the network controller is capable of issuing information transfer permits to the secondary network nodes permitting the secondary network nodes to send information to the primary network node in which the amounts of information to be sent by the secondary network nodes are distributed in the time domain and at least one further domain, in that the shared medium is represented as a number of independent connection paths between the secondary network nodes and the primary network node corresponding to said at least one further domain, in that the network controller associates each transfer permit with an unique connection path available within said shared medium, and in that the secondary network nodes are permitted to send an amount of information only upon receipt of an information transfer permit and merely over said unique connection path associated with said permit.

### Summary of the Invention

The present invention is characterised over the disclosure of the above-mentioned Fransson paper in that the primary network node comprises the network controller, the independent connection paths are defined in the time domain and said at least one further domain in the network controller for each of said plurality of secondary nodes, and in the network controller the information transfer permits are fed to distribution means which distribute the permits over available buffer entries in a multi-dimensional FIFO buffer having a dimension for every domain in which the information may be distributed, and the distribution means are provided with information about available connection paths between the primary network node and each secondary network node and map the buffer entries of the FIFO buffer accordingly, prior to distributing the permits over the available buffer entries of said FIFO buffer.

Because, in this method, the network controller provides for a centralized issuance of transfer permits for all connection paths and thereby keeps control of the allocation of the connection paths between the primary network node and the different secondary network nodes, the invention offers a centralized allocation management of the network resources involved and the information streams on the several connection paths are all brought under control of the network controller. Because the transfer permits are each associated with a specific, unique connection path between the primary and secondary network node, the method according to the invention also provides for both static as well as dynamic allocation of connection paths between the network nodes besides implicitly designating specific time slots within such a connection path for the transfer of information. If for some reason a connection path would fail, then the information stream may be re-routed on the fly over another connection path by setting the connection path parameters in the permits appropriately. The invention hence provides for an integrated way of protection switching.

The method of the invention can be extended to govern not only upstream information transport in a network environment, but downstream traffic as well. A specific embodiment of the method according to the invention is accordingly **characterized in that** that the primary network node is capable of sending information transfer requests to the network controller for transferring amounts of information to the secondary network nodes, and in that the network controller is capable of issuing information transfer permits to the primary network node, permitting the primary network node to send said amounts of information to the secondary network nodes only upon receipt of such an information transfer permit and merely over an unique connection path associated with said permit. Although in the downstream direction collisions are less likely to occur, the advantage of control of the downstream traffic at a similar level as that of the upstream traffic inter alia resides in the possibility of protection switching of the downstream information transport. If for some reason a particular connection would fail, both the upstream and the downstream traffic may be instantly re-routed when employing this embodiment of the method of the invention.

It is to be understood that the connection paths need not be separate physical connections such as cables or the like, although the shared medium can of course consist of a bundle of separate physical cables or fibres. In this respect, a specific embodiment of the method according to the invention is **characterized in that** said at least one further domain resides in at least one of separate physical connections, orthogonal frequencies and different wavelengths. In this case the connection paths, apart from separate physical connections, may also reside in different wavelengths or frequencies carrying separate information streams in one and the same physical connection. More specifically a further embodiments of the method according to the invention is **characterized in that** said network is an optical network and in that said connections are separate optical fibres and said different wavelengths are chosen from an optical spectrum. In this case the possible connection paths are formed by the combination of several distinct optical wavelengths with a number of distinct optical fibres.

In a preferred embodiment the method according to the invention is **characterized in that** that at least part of the information transfer requests by any of the secondary network nodes is attached to information send by said secondary network node to the primary network node and in that at least part of the information transfer permits for any of the secondary network nodes is attached to information send to said secondary network node by the primary network node. In this manner the need for additional resources is avoided for dealing with upstream transfer requests and permits to be sent between the secondary nodes and the network controller. Moreover because the requests are coupled to previous permits, additional bandwidth is thus automatically allocated to those nodes with a lot of upstream traffic.

Although the information, which is sent by the network nodes, may be any amount, a preferred embodiment of the method according to the invention is **characterized in that** the information is segmented in quantified information cells of fixed size and in that the network nodes are allowed to send one information cell for each permit. The sending network node may calculate themselves the number of cells required for transferring the total amount of information offered for forwarding. This number is communicated to the network controller, which merely has to issue the corresponding number of permits. These permits are then processed in the usual manner. Accordingly any overhead involved in determining the number of permits required to transfer the total amount of information is removed from the network controller and distributed over the several sending network nodes concerned

In a more specific embodiment the method according to the invention is **characterized in that** that the information cells to be transferred from one network node to another network node are placed in a buffer associated with said one network node and in that said one network node communicates the length of said buffer by means of a transfer request to the network controller. As such a master-slave relationship is created between the sending network nodes and the controller in which the controller is the master controlling the transfer of information and the sending network nodes are slaves providing for temporary storage of the information to be sent and requesting the appropriate number of permits for sending the information.

In order to reduce the blocking probability a further embodiment of the method is according to the invention **characterized in that** the network controller is capable of interrogating at least part of the network nodes for information transfer requests and in that such an information transfer request is send to the controller upon interrogation. Such interrogation of network nodes will impose a certain load to the network controller but on the other hand allow the nodes concerned to advertise their need for bandwidth when no upstream traffic is permitted yet, thus reducing the blocking probability. In practice an optimal trade off between additional overhead for the controller and blocking probability may be realized in this manner.

For integrated services exhibiting a high diversity in both traffic statistics as well as required priority, a method in which transfer requests are merely send on a per cell basis and contain the buffer length of the sending network node might be inefficient. Such a method could then lead to a substantial amount of overhead. Moreover, frequently polling network users for bandwidth requests by the network controller, could impose an overhead on the network controller which might be unacceptable. Accordingly, when high demands need to be met, the response time of such a method might violate traffic conditions required for high quality real-time service classes. To nevertheless provide a solution for such applications, a further embodiment of the method according to the invention is **characterized in that** the network controller comprises at least one generator being associated with at least one network node, in that said generator is capable of periodically producing information transfer permits and in that said information transfer permits are issued to said at least one network node. A further embodiment of the method according to the invention, in this respect, is **characterized in that** the network controller comprises a plurality of generators, every one of said generators being associated with at least one network node. These embodiments provide a method in which information transfer permits are issued at certain or all network node independent of the traffic carried by those nodes. By adapting the rate at which these permits are issued to the different nodes, a mutual priority setting between different nodes may be implemented in the network controlled by these embodiments of the method of the invention. Because the information transfer permits are issued on a regular basis by means of a separate generator, any additional overhead on the network controller is avoided, at least to a considerable extend, and the blocking probability of the network nodes concerned may be kept sufficiently low even with largely varying bandwidth demands.

In a further preferred embodiment the method according to the invention is **characterised in that** the primary network node is integrated with the network controller such that the submission of an information transfer permits to said primary node by said controller is directly associated with the transferring of the permitted information by said primary node. In this manner, the controller can rapidly respond to changes in the amount of information offered by the primary network node. In practice, the generators of the network controller that are associated with downstream buffers may not generate permits but generate the information cells that are to be transferred and process them as if they were permits.

Each of the generators may produce the transfer permits in accordance to the amount of information to be transferred. The method according to the invention is also **characterized in that** the information transfer permits are fed to distribution means, which distribute the permits over available buffer entries in a multi-dimensional FIFO buffer having a dimension for every domain in which the information may be distributed. A FIFO (first-in-first-out) buffer at the same time provides for a temporary storage of the permits as well of a distribution of the permits in the time domain. The FIFO buffer contains arrays of entries for each dimension, corresponding with possible connection paths between the secondary network nodes and the primary network node. Bandwidth reservations and transfer requests are first checked according to available resources in every domain in which the information may be distributed to a particular secondary node, based on bandwidth/traffic specification that apply to a certain secondary network node. When granted, bandwidth reservations and transfer requests are translated into corresponding transfer permit rates by which the generator may be programmed. Resource division multiplexing is subsequently performed by the distribution means. These means homogeneously fill the available resources by distributing the permits over the available entries in the FIFO buffer. This can be in a scanning kind of order or in a random 'salt pourer'-like order.

The method according to the invention is also **characterized in that** the distribution means are provided with information about available connection paths between the primary network node and each secondary network node and map the buffer entries of the FIFO buffer accordingly prior to distributing the permits over the available buffer entries of said FIFO buffer. In this respect mapping means that the buffer entries, corresponding with connection paths, which are not available, are marked that way and are subsequently not allocatable by the distribution means. The information about available connections may be provided dynamically, such that in case of failure of one or more of the connection paths said connection paths may be disregarded as available paths and the information is redirected over the remaining paths available, at least as long as the excluded connection are out of order. This embodiment thus provides for an integrated form of protection switching. The connection information concerned, however, may also be of a more static nature in the sense that for instance some secondary network nodes are more or less confined to certain connection paths only. In case of wavelength multiplexing for example these connection paths may for instance comprise all connection path involving only a single wavelength. In that case, the hardware at the secondary network node need only be adapted for that specific wavelength, which may save installation cost. It also becomes possible to allocate a certain connection path to one secondary network node or group of nodes only so that these may have a dedicated connection to the primary network node at their disposal without disturbance or bandwidth loss due to information originating from other secondary nodes in the network. This embodiment accordingly provides for a lot of flexibility to arrange the network as appropriate.

Each permit issued by the controller to a secondary network node entails details about the connection path allocated for an amount of information to be sent by the network node. The secondary network node should use the assigned connection path, which is allocated this way, for forwarding the next amount of upstream information. The connection information may be explicit such that the specific connection path, including for instance the time slot, wavelength and physical connection, is attached as a vector to a down stream data package. However in order to save the overhead involved in calculating this vector information and encoding it into a down stream data package, a further specific embodiment of the method according to the invention is **characterized in that** the secondary network nodes are permitted to transfer an amount of information only over a connection path that is uniquely associated with the connection path used for issuing the corresponding information transfer permit. Although this requires a fixed relation between the downstream and upstream connection path, in practice this imposes no real restriction since the downstream traffic is generally considerably larger than the upstream traffic.

In order to avoid collisions between information emerging from different sources and connection paths, it is important that the respective information streams are synchronized to one another. The network controller is responsible for such synchronisation by allocating specific time slots for the information concerned. To take into account path length variations and other possible retardation effects in the network, a further embodiment of the method according to the invention is **characterized in that** delay means are associated with at least a number of secondary network nodes and in that information is send from such a secondary network node taking into account a delay time set by the delay means, the delay times associated with different secondary network nodes being tuned to one another such that a time of sending information is at least substantially synchronized among the other secondary network nodes.

More particularly, a further embodiment of the method is according to the invention **characterized in that** delay times for said delay means are calculated by the network controller and send back to a secondary network node during an initial set up of a connection between a secondary network node and the primary network node. If necessary, these delay times are corrected during the operation of the said connection. This provides for an automatic adjustment of the secondary nodes with respect to one another, such that the upstream information, sent from several sources in the network, will be aligned.

In order to allow other network entities to transfer a predetermined amount of information between the primary network node and secondary network nodes, and to reduce the blocking probability a further embodiment of the method is according to the invention characterised in that the network controller is capable of issuing information transfer permits to the network nodes in accordance with bandwidth reservations for said network nodes issued by a further network entity. In this manner, network entities that make use of the connections across the network are able to employ deterministic traffic types that may be associated with high service qualities. Moreover, said entities are able to control the availability to send transfer requests for unreserved traffic in accordance with a desired blocking probability.

In a more specific embodiment the method according to the invention is characterised in that amounts of information to be transferred between a secondary network node and the primary network node are placed in a first and a second buffer associated with the sending network node, in that amounts of information for which no bandwidth is reserved are placed in said first buffer, in that amounts of information for which bandwidth is reserved are placed in said second buffer, in that the sending network node communicates the identity of the appropriate one of said first and second buffer to the network controller by means of an information transfer request, and in that the network controller is capable of differentiating while issuing permits for said first and second buffer. As such a master-slave relationship is created between the network nodes and the controller in which the controller is the master controlling the transfer of information and the network nodes are slaves providing themselves for temporary storage of the information to be sent. Two distinct buffers addressable by the network controller are important to prevent non-reserved traffic blocking the reservations made for other traffic. In practice the buffers storing downstream information reside at the primary node, while the buffers for upstream information reside at the associated secondary network nodes.

In another more specific embodiment the method according to the invention is characterised in that amounts of information to be send by the primary network node to a multitude of secondary network nodes are divided over a common first and second buffer associated with said multitude of secondary network nodes. In this manner, the network is capable of supporting multicast transferring of information by using a minimum of network resources.

In another specific embodiment the method according to the invention is characterised in that amounts of information to be transferred from the primary network node to an unspecified secondary network node are placed in at least one buffer associated with said unspecified node and in that the primary network node communicates the contents of said buffer to the network controller by means of an information transfer request. In this manner, the network is capable of investigating the presence of unidentified secondary network nodes in order to initialise said nodes.

The invention moreover relates to software implementing the method according to the invention as described hereinbefore as well as to an information network operated under control of said method. In this respect it should be understood that the several components addressed in the method may be real, physical components but may also be merely virtual entities residing in a software environment incorporating the method of the invention.

### Brief Description of the Drawing

The invention will now be described in more detail on basis of a number of specific examples and with reference to the accompanying drawings, which show in:
- figure 1: a schematic representation of a first embodiment of an information network according to the invention operated according to an embodiment of the method according to the invention;
- figure 2: a schematic representation of the network controller in th enetwork of figure 1, demonstrating at least some of the functions it performs;
- figure 3: a representation of a downstream information cell structure;
- figure 4: a representation of an upstream information cell structure;
- figure 5: a schematic layout of a master controller associated with the primary network node in the network of figure 1;
- figure 6: a schematic layout of a slave controller associated with a secondary network node residing in the network of figure 1;
- figure 7: a schematic representation of a second embodiment of an information network according to the invention operated according to the first embodiment of the method according to the invention;
- figure 8: a schematic layout of a slave controller associated with a secondary network node used in the network of figure 7;
- figure 9: a schematic representation of a third embodiment of an information network according to the invention operated according to a second embodiment of the method according to the invention;
- figure 10 a: schematic representation of the network controller in the network of figure 9, demonstrating at least some of the functions it performs;
- figure 11: a schematic layout of a master controller associated with the primary network node in the network of figure 9;
- figure 12: a schematic layout of a slave controller associated with a secondary network node residing in the network of figure 9; and
- figure 13: a schematic layout of a slave controller associated with a single wavelength secondary network node, applied in a fourth embodiment of the network according to the invention.

In the drawings, like or similar parts are as much as possible designated by the same reference numerals.

### Detailed Description

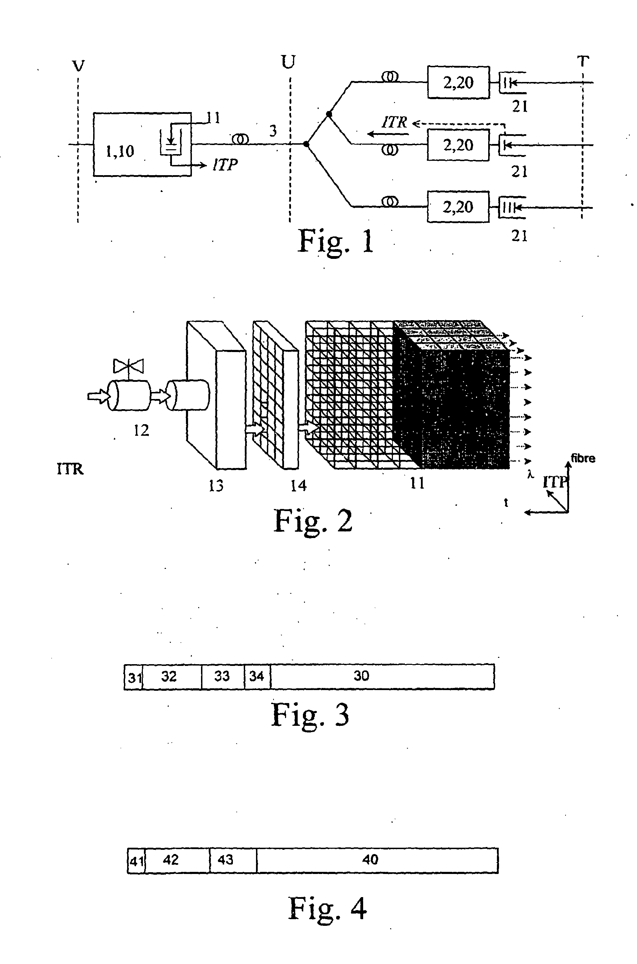

The network depicted in figure 1 is a passive optical network. Passive optical networks (PONs) offer an important solution for the implementation of broadband access networks and high speed local area networks (LANs). PONs combine a large transport capacity with the capability of serving a wide geographical area. They support connections from central network entities like local exchanges, to residential network units and thus can be used to deploy network concepts like fibre-to-the-home (FTTH) and fibre-to-the-curb (FTTC).). On a smaller scale they may provide the means for the employment of very high speed LANs.

In passive optical networks, many users usually share the same medium. For efficient use of the available bandwidth, a method of controlling access in the network is required. For tree topologies, shared access by downstream traffic can be controlled using time division multiplexing (TDMA), but in the upstream direction a concentration of user data is inevitable. Besides shared access, the network should preferably be able to support dynamical changes of the bandwidth demand, both in time and in geographical distribution.

Another important topic for the successful operation of networks concerns protection switching. Complex optical communication systems may exhibit failures due to malfunctioning of sensitive (optical) components, cable fractures etc. It is important that these kinds of failures do not affect operation of the rest of the network. Connections experiencing a particular fault should be automatically by-passed if possible. This process is called protection switching. Moreover the method controlling access to the network should preferably meet the following additional demands:
- quality of service (QoS) support, providing means to deliver guaranteed bandwidth and low blocking probability, which means that users should preferably have instant access to the network;
- fairness, such that users must experience the same share of the medium, apart from intentional priority control or traffic contract variations;
- efficiency, by allocating the resources that are available in the network to user demand as much as possible, and by limiting the amount of overhead;
- scalability and adaptability, which means that the method can be implemented for, and adapted to a network with an increasing number of users and/or resources;
- evolution, meaning the possibility to integrate the network with existing infrastructures; and
- simplicity, which means that the method can be implemented in a robust and cost-effective manner.

The method according to the invention meets these criteria by the integration of the time domain and at least one further domain in the course of resource allocation and management for at least the secondary network nodes in the network. Figure 1 depicts an example of an optical network implementing this method in which a primary network node 1 is connected in a tree topology to several secondary network nodes 2, three of them being shown using at least in part a shared medium 3. The shared medium in this example consists of a bundle of separate optical fibres, each being capable of carrying information signals at distinct wavelengths using a well known technique of wavelength division multiplexing (WDM). The information signals consist of separate cell of fixed length, which are fed to the shared medium 3 in a consecutive manner using time division multiplexing access (TDMA). Accordingly the information cells may be distributed in the time domain as well as over different wavelength and over different physical connections.

The secondary network nodes 2 are for instance, like in the present example, optical network units (ONU) through which end users may be connected to the network, but may also reside more upstream in the network. In principle every such individual secondary node 2 is provided with access to network resources of said shared medium 3, i.e. the different fibres, wavelengths and timeslots, in the upstream direction upon receipt of a corresponding permit issued by a central controller, while information is broadcast in the downstream direction to the secondary nodes 2 all together by the primary network node 1. The primary network node 1 consists in this example of an Optical Line Termination (OLT) which connects the optical network to a information backbone or further network over the interface designated V in the figures.

The basic operation of the method is depicted in figure 1 and corresponds to that of the method described in the paper of the Proceedings of the RACE Open Workshop on Broadband Access referred to above by J. Carcia et al. entitled 'A Cell Based MAC Protocol with Traffic Shaping and a Global FIFO Strategy', held in Nijmegen, The Netherlands, June 1993.

The method for controlling access to the network is performed in a master-slave scheme where the master controller 10 is associated with the primary network node 1 and slave controllers 20 belong to the secondary network nodes 2. Information cells arriving at the user interface T of a secondary node 2 are placed in an input buffer 21 of the slave controller 20. At specific moments, the salve controller 20 reports it's buffer 21 length upstream across the U interface to the master controller 10 of the primary network node 1 by means of an information transfer request (ITR). These requests can be submitted on a unsolicited and solicited basis. It can be attached to user cells upstream (unsolicited) or, when no upstream traffic is permitted yet, it can send a request cell when a request-permit is received. The master network controller 10 translates this request, as a result of a granting algorithm, into a corresponding information transfer permit (ITP) and places it in a multi-dimensional first-in-first-out (FIFO) buffer 11, having a dimension for every domain in which the amounts of information may be distributed. This buffer 11 will submit the information transfer permissions downstream. The slave controller 20 of the secondary node 2 addressed sends the permitted amount of user data upstream. This amount is one cell in size for each permit in this example, but can in fact be any amount. Normally in this respect, an optimal trade off is made between additional overhead and blocking probability.

The FIFO buffer 11 represents the slots, which are allocated for the upstream transmission. For every domain involved, this buffer 11 gains a dimension. In case of a wavelength and space domain multiple access system, as in this example, the FIFO buffer 11 is three-dimensional. The method according to the invention however allows for involvement of any domain. As such it can also be used for other, in itself known, multiplexing schemes such as used in Code Division Multiplexing Access (CDMA) and Orthogonal Frequency Division Multiplexing Access (OFDM). Figure 2 shows a schematic representation of the FIFO buffer 11 together with the basic functions of the master controller 10 applied to this buffer

Information transfer requests (ITRs) for upstream information transmission are assembled by bandwidth management means 12 which count the information transfer requests that are submitted by every secondary node 2 and perform the temporal allocation of information transfer permits according to the bandwidth/traffic specifications that apply to every node 2 based on a suitable granting procedure. These permits are fed to distribution means 13,14.

Resource division multiplexing is now performed by the distribution means 13,14. When requests are granted, these distribution means 13,14 homogeneously fill the available resources represented by available entries of the FIFO-buffer 11. This multi-dimensional queue can be seen as an array of TDMA FIFO buffers, one for every further domain in which the information may be distributed, i.e. in this example one for every wavelength on every fibre. The distribution of the permits in this queue 11 can be in a scanning kind of order or in a random 'salt pourer'-like order. The distribution means 13,14 concurrently decide which cross-section of the resource space is available to which secondary node 2, based on connection information provided to the distribution means about available connection paths between the primary network node 1 and a specific secondary node 2. The entries of the FIFO buffer 11 are mapped accordingly by a filter function 14 of the distribution means. In the depicted state, the filter 14 is switched to serve a request from a single wavelength node 2 connected to three fibres. The FIFO buffer 11 eventually flushes the information transfer permits (ITPs) with a certain speed from left to right to the a suitable transmitter.

From figure 2 it will be appreciated that according to the invention resource division is performed *after* bandwidth management, so all available bandwidth can be used. This way there is no need for active (re) allocation management of wavelengths for traffic associated with different services, providers, users, ONUs, or any other groups. The resource manager enables seamless integration of both multiple wavelength ONUs as well as single wavelength ONUs, in one access network. A similar mechanism applies for protection switching. In case of a failure in an optical wavelength path or a complete fibre the corresponding state of the filter 14 can be adjusted instantly. Traffic load is then automatically distributed among the remaining resources. The distribution process allows for variations in the propagation speeds of the FIFO queues. This means that multiple bit rates can be supported.

The permits contain information about the associated secondary node 2, the assigned resource selection and the type of permit (data or solicited request). The resource selection contains information indicating the timeslot, the wavelength and the fibre assigned for a secondary node's 2 next upstream cell of information.

The primary network node 1 is most conveniently integrated with the network controller 10, such that information transfer requests and permits are preferably submitted by direct physical means. The secondary nodes 2 are then located at some distance. Requests and permits for secondary nodes 2 can be submitted in various ways: in-band or out-of-band, with or without a dedicated signalling wavelength/fibre. Since this method according to the invention covers the whole time-wavelength-fibre space, all options are available. For synchronisation purposes, both permit and request overhead is preferably attached to the time slot associated with an information cell. It is therefore convenient to attach permits addressed to nodes 3 permits to downstream cells and attaching requests from these nodes to upstream cells.

A combination of explicit and implicit assignment can be used in this respect. Explicit assignment involves attaching a [time slot, wavelength, fibre]-vector to the downstream cell frames. To reduce overhead, implicit addressing can be used. This relates the resource information of the downstream permit uniquely to the resources to be used for the upstream transfer of information. Obviously this requires a fixed relation between upstream and downstream resources. This imposes no restrictions since the downstream traffic is generally larger than upstream. Up and downstream timeslots are, like any connection resource, preferably synchronised by integer quantities (i.e. Slot Rate_{down} = n x Slot Rateᵤₚ, n = 1,2,..), allowing cells to be sent on the same fibre as where the permit was received, at a distinct time after the permit was received. Implicit wavelength assignments may be implemented by using multiple receivers at the nodes 2. When a receiver is not able to detect the downstream wavelength however, overhead is required for explicit wavelength assignment and for the distinction between request permits and data permits. Request permits are issued by the master controller 10 during times the network is idle, enabling the slave controllers 20 to advertise their buffer length even if no downstream traffic takes place, thus improving accessibility of the network.

Permit addressing can be implemented by encoding a node address of the node which is entitled to a permit into a downstream information cell whose destination need not necessary be the node entitled to the permit. As the downstream cells are broadcast over all secondary nodes 2 every secondary node 2 will receive the permit encoded in the cell anyway. An example of a downstream cell frame structure for explicit wavelength assignment is shown in Figure 3. Here a preamble 31 is added for aligning and dynamic ranging purposes. The actual downstream information cell 30 is preceded by this preamble 31, the actual permit 32 entailing the address of the node entitled to send a cell of information, the address 33 of the receiving node, the type of permit 34, i.e. request permit or data permit, and optionally explicit resource information, i.e. the timeslot, wavelength and fibre to be used.

An information transfer request by a secondary nodes 2 is preferably encoded in an upstream information cell sent by that node 2. The resulting upstream cell frame, being shown schematically in figure 4, will contain the original cell information 40, together with the source address 42 of the node both sending the cell and requesting information transfer and the buffer length 43 of the buffer 21 associated with the node 2 concerned, apart from a preamble 41 for control purposes. The cell frame of figure 4 resembles an un-solicited request. Solicited requests, i.e. requests sent upon receipt of a specific request permit, may consist of dedicated cell frames, preferably shared among a number of secondary nodes 2.

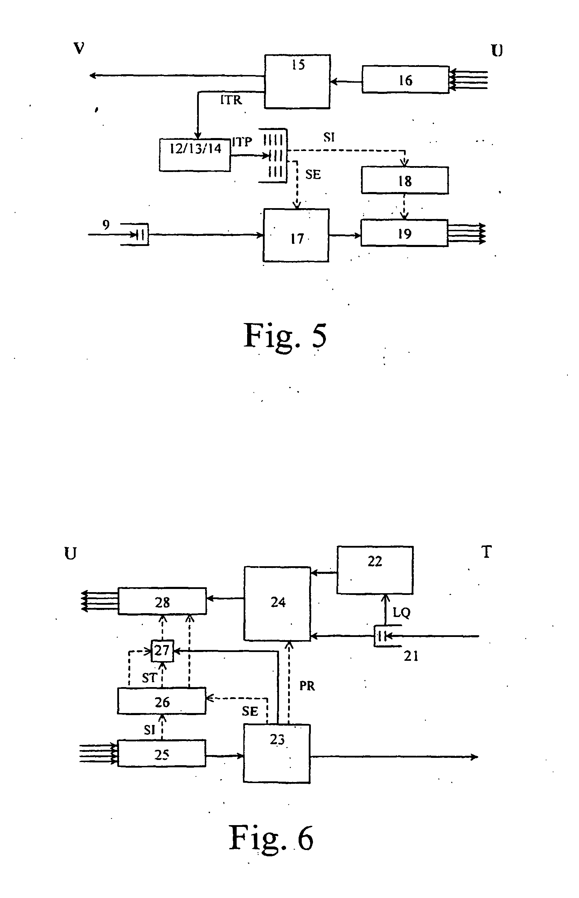

In Figure 5 the important functions of the master controller 10 associated with the primary network node 1 are depicted. A decoder 15 extracts packets from the upstream data received by means of a receiver 16 and extracts a request ITR from the cell frame info or from a solicited request packet. The requests are fed to bandwidth management means 12, distribution means 13 and filter means 14, described earlier, which places permits (including target information) into the resource allocation queue 11. This is the FIFO buffer that outputs explicit resource assignment information SE to an encoder 17. Implicit allocation SI is performed by a selector 18, which selects the proper wavelength on the proper fibre. The encoder 17 puts data cells and the information transfer permit ITP, entailing the resource assigment information, into a downstream frame which is taken from an input buffer 9 of the controller 10 and fed to a transmitter 19 to be broadcast into the network structure. To facilitate upgrading of the system, the master controller could be implemented using a bus architecture between the bandwidth/resource management means 12,13,14 and an array of resource queue modules 11. Capacity can then be added to the system by inserting an extra fibre/wavelength module.

Figure 6 shows the basic layout of a slave controller 20 associated with a secondary network node 2. A request generator 22 monitors the queue length LQ of the input buffer 21. When a decoder 23 detects a permit for requests (PR) an encoder 24 inserts a request packet in a dedicated request frame, otherwise it inserts request information in the frame of an upstream information cell taken from the input buffer 21.

The decoder 23 disassembles incoming frames coming from a receiver 25, which may be a single receiver on a single fibre or consists of a batch of receivers on different fibres. The decoder 23 extracts explicit assignments (SE) and detects permits for information cell transfer and permits for requests. A selector 26 combines explicit (SE) and implicit (SI) information for selection of the proper fibre and/or wavelength. Implicit timeslot selection (ST) is facilitated by delay means 27 which incorporate a delay which is tuned such that inserted frames, are aligned with frames from other controllers. The delay time is calculated by the master controller 10 and sent back to the slave controller 20 during an initial ranging phase. For WDM purposes, ranging must include all wavelengths in the system to determine the maximum delay. Delay variations due to chromatic dispersion are addressed by the delay means 27. The resulting resource assignment is fed to a transmitter 28, which transmits the frame on the appropriate fibre, at the appropriate wavelength and in the appropriate time slot. The transmitter 28 can be a (fast-) tuneable laser or an array of single wavelength lasers on one ore more fibres. Like the master controller 10, the slave controller 20 can be implemented in a modular fashion to allow upgrading.

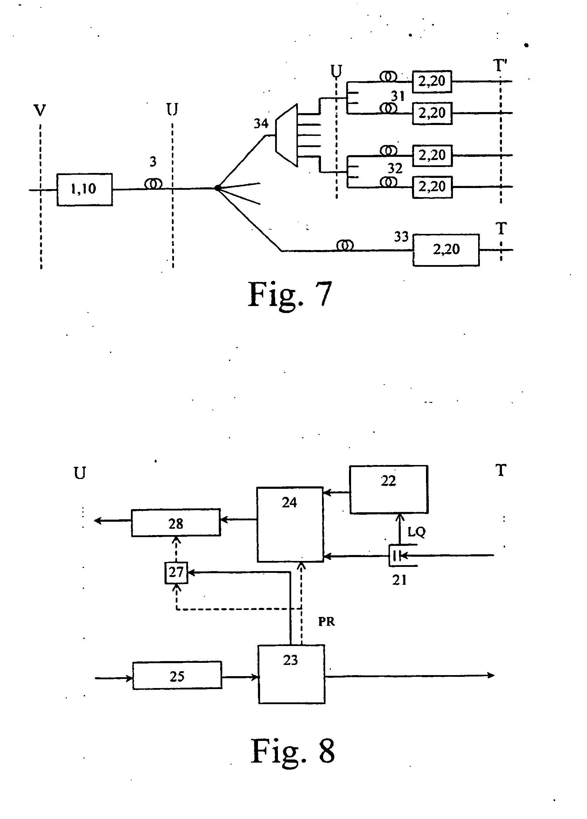

A second embodiment of a network controlled by a method according to the invention is shown in figure 7. This network is basically the same as that of the first example, but in this case a number of groups 31,32 of secondary network nodes 2 are each accessible over merely a single wavelength, while another group 33 of secondary network nodes is capable of accessing different wavelengths like in the previous example. The single wavelength groups 31,32 of nodes are connected in a tree structure through a wavelength division multiplexer (WDM) 34 feeding a specific wavelength to each particular group 31,32, while the multiple wavelength group 33 is directly connected to the shared medium 3 and receive all available wavelengths. The wavelength criteria imposed in this manner on the different nodes are fed to filter means associated with distribution means such that only the applicable resources will be assigned to these nodes.

This hybrid topology is a less expensive alternative for the previous example, because single wavelength nodes 31,32 require less hardware but trade in dynamic bandwidth allocation freedom, while the multiple wavelength nodes 33 still may use all available resources at all available wavelengths. The multiple wavelength nodes are provided with a slave controller as described in the first embodiment, while for the single wavelength nodes 31,32 a simplified slave controller such as the one depicted in figure 8 suffices. This slave controller comprises an input buffer 21, a request generator 22, an decoder 23, an encoder 24, a receiver 25, delay means 27 and a transmitter 28, just like the slave controller of figure 6, but in this case the transmitter and receiver need only be capable of handling one single wavelength.

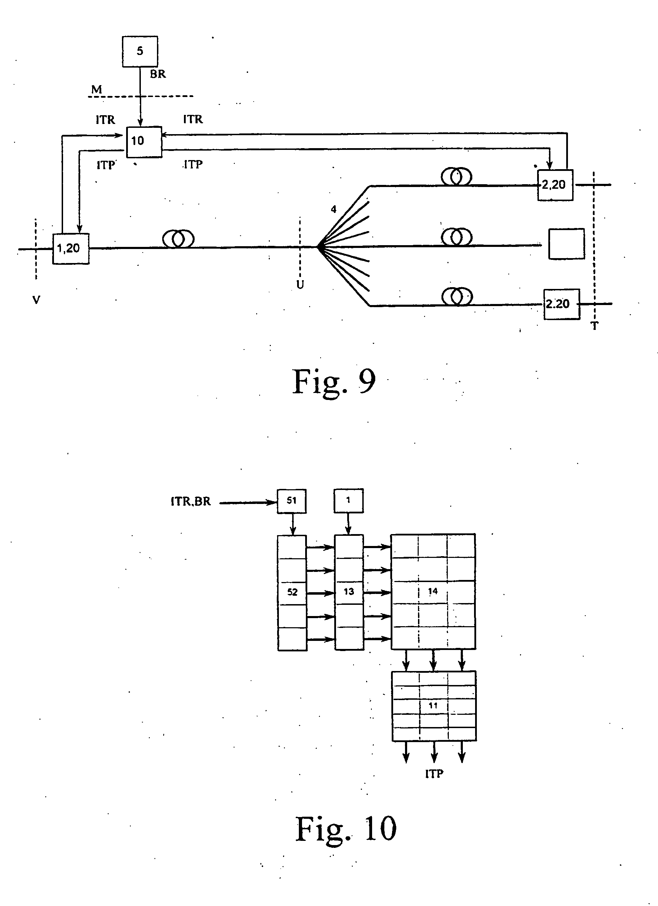

Figure 9 gives a schematic representation of an embodiment of an information network operated in accordance with a second embodiment of the method according to the invention. In this case, not only the upstream information stream is governed by a network controller, but so is the downstream information emanating from the primary network node 1. Moreover bandwidth may be explicitly reserved, in this embodiment, by further entities 5 which access the network via interface M.

The method of this second embodiment is performed in a master-slave scheme where the master controller 10 is associated with the primary network node 1 and the slave controllers 20 belong to the secondary network nodes 2 for upstream access and to primary node 1 for downstream access. Information arriving at the user interfaces T of a secondary node 2 is differentiated between a reserved part and an unreserved part. Both streams are segmented into cells and placed in an input buffer, one for each stream. Information arriving at the V interfaces of the primary node 1 is differentiated on the basis of the secondary nodes 2 to which it has to be transferred, followed by a differentiation again on traffic qualification. All streams are segmented into cells of fixed length and placed in an input buffer, dedicated to either the reserved or the unreserved downstream traffic of one secondary node 2 or, for multicast purposes, of a group of secondary nodes 2.

All buffers in the network are allowed to transfer one cell across the shared medium 3 when they receive an information transfer permit (ITP) from the network controller 10. The network nodes 1 and 2 advertise their momentary requirements by means of an information transfer request (ITR) to the network controller 10 which translates this request, as a result of a granting algorithm, into corresponding ITPs. Alternatively, further network entities 5 that use the network may reserve a predetermined amount of bandwidth for a period of time by means of a bandwidth reservation (BR) issued to the network controller 10. When granted by controller 10, a BR results in a periodic submission of ITPs for a particular reserved or unreserved traffic buffer. ITPs for unreserved traffic buffers are requested by network nodes 1 and 2 themselves through continuously sending an ITR with the state of this buffer. By reserving bandwidth for unreserved traffic, the user can control the desired blocking probability observed for this type of traffic.

Figure 10 shows a schematic representation of a network controller 10 as used in the network of figure 9. Information transfer permits (ITPs) are periodically produced by generators 52 which are associated with every reserved and unreserved buffer in the information network, both for downstream traffic at the primary node 1 as well as for upstream traffic at the secondary nodes 2. Since every permit accounts for one transmitted cell, the rate of each node-generator pair 2,52 must be in accordance with at most the total amount of resources available to this particular secondary node 2, while the sum of the individual rates of the generators 52 must be in accordance with at most the total amount of resources available in the system.

Information transfer requests (ITRs) and bandwidth reservations (BRs) for transmission of information across the shared medium 3 are evaluated by the network controller 10 based on a suitable granting procedure. When granted, they are processed by bandwidth controller means 51 which program the generators 52. Resource division multiplexing is now performed by the distribution and filter means 13,14. When requests are granted, these distribution means 13,14 homogeneously fill the available resources represented by available entries of the FIFO-buffer 11, in a similar fashion as in the examples of the invention described above. The FIFO buffer 11 eventually flushes the information transfer permits (ITPs) with a certain speed from top to bottom to a suitable transmitter. From figure 10 it will be appreciated that also in this case resource division is performed *after* bandwidth management, so all available bandwidth can be used. This way there is no need for active (re) allocation management of wavelengths for traffic associated with different services, providers, users, ONUs, or any other groups.

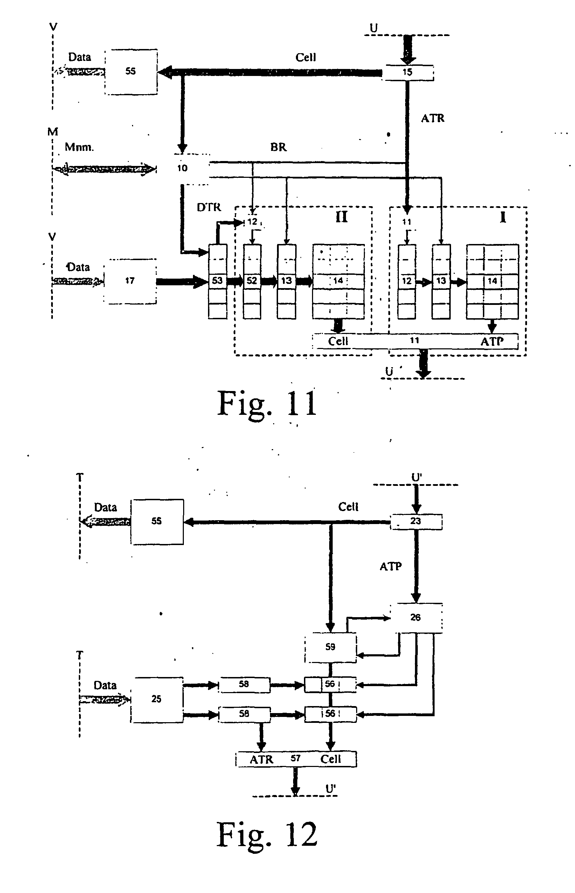

In Figure 11 the most important functions of the master controller 10 and the primary network node 1 are depicted. The functions 51,52,13 and 14 of figure 10 have been split up in a part I that controls the upstream buffers 20 of the nodes 2, and a part II that controls the downstream buffers 20 of the node 1. The downstream control is modified in that it does not generate and allocates permits, but actually picks the top cells from buffers 53 which it maps on appropriate resources for transmission, similar to permits issued to the node. In this particular example, the two controller parts share one FIFO buffer 11 to indicate the attachment of permits to downstream cells.

At the receiving end, a decoder 15 will separate attached requests from the upstream cells. Assembler 55 de-segments the upstream cells for all source nodes 2 separately. This as opposed to the encoder 17 which segments the downstream information into cells after differentiating the traffic on the basis of node 2 address and traffic qualification, and then puts the cells in the proper buffer 53.

Attached transfer requests (ATR) are directed to the bandwidth controller 12 of the upstream part I of the master controller 10, while direct transfer requests (DTRs) from the stochastic buffers 53 report their status directly to the bandwidth controller 12 of the downstream part II. The resource filters 13,14 are controlled by a master controller 10, which deals with bandwidth requests (BRs) and instructs the generators 52 accordingly. A special downstream buffer 53 has been assigned for management purposes, which enable the master controller 10 to perform operations and maintenance of the network.

Figure 12 shows the most important secondary node 2 functions. Functions 55 and 25 again handle the segmentation and location of cells. The received cells are placed in suitable buffers 58. A decoder 23 splits downstream cells and permits. Selector 26 determines which buffer is allowed to send a cell upstream on which transmitter (an extension of function 14) by selecting one of gates 56. A combiner 57 is an equivalent of the FIFO buffer 11 and collects requests and cells to be transmitted on each connection path. Slave controller 59 is able to insert and extract cells for management purposes. It receives a ranging delay from master controller 10 and forwards it to selector 26 which will apply this delay to every gate 56 when it receives a permit.

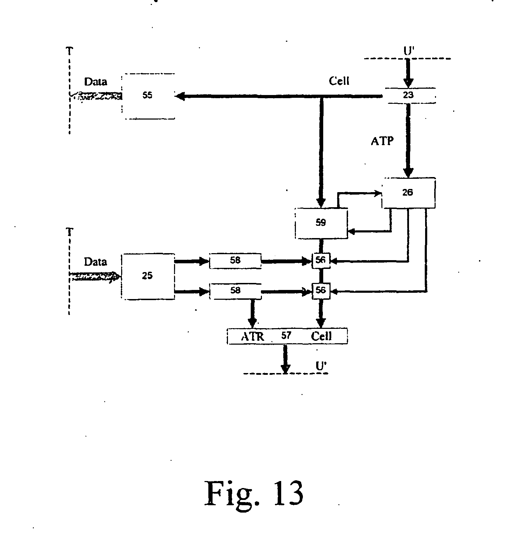

For a single wavelength node 2 a simplified layout such as the one depicted in figure 13 suffices. Functions 23,25,26 and 55 through 59, scale down considerably when only one resource is used. Further cost reduction can be expected from the used optics since in this case the transmitter and receiver need only be capable of handling one single wavelength.

Although the invention has been described with reference to merely a limited number of embodiments it will be appreciated that the invention is not at all limited to the presented embodiments. On the contrary, a skilled person will be able to arrive at several other embodiments and variations without departing from the scope of the present invention as set out in the claims.

## Claims

1. Method of controlling access in an information network in which a primary network node (1) is connected to a plurality of secondary network nodes (2) through a medium (3) which is shared among the secondary network nodes wherein information is exchanged between the primary network node and the secondary network nodes, the secondary network nodes are capable of sending information transfer requests (ITR) to a network controller (10) for transferring an amount of information to the primary network node, and wherein the network controller is capable of issuing information transfer permits (ITP) to the secondary network nodes permitting the secondary network nodes to send information to the primary network node in which the amounts of information to be sent by the secondary network nodes are distributed in the time domain and at least one further domain, in that the shared medium (3) is represented as a number of independent connection paths between the secondary network nodes and the primary network node corresponding to said at least one further domain, in that the network controller associates each transfer permit (ITP) with an unique connection path available within said shared medium, and in that the secondary network nodes are permitted to send an amount of information only upon receipt of an information transfer permit and merely over said unique connection path associated with said permit, **characterised in that**
the primary network node (1) comprises the network controller,
the independent convection paths are defined in the time domain and said at least one further domain in the network controller (10) for each of said plurality of secondary nodes (2), and
in the network controller (10) the information transfer permits (ITP) are fed to distribution means (13,14) which distribute the permits over available buffer entries in a multi-dimensional FIFO buffer (11) having a dimension for every domain in which the information may be distributed, and
the distribution means (13,14) are provided with information about available connection paths between the primary network node and each secondary network node and map the buffer entries of the FIFO buffer (11) accordingly, prior to distributing the permits (ITP) over the available buffer entries of said FIFO buffer.

2. Method according to claim 1 **characterized in that** the primary network node (1) is capable of sending information transfer requests to the network controller (10) for transferring amounts of information to the secondary network nodes, and **in that** the network controller (10) is capable of issuing information transfer permits to the primary network node (1), permitting the primary network node to send said amounts of information to the secondary network nodes (2) only upon receipt of such an information transfer permit and merely over an unique connection path associated with said permit.

3. Method according to claim 1 or 2 **characterized in that** said at least further domain resides in at least one of separate physical connections, orthogonal frequencies and different wavelengths.

4. Method according to claim 3 **characterized in that** said network is an optical network and **in that** said connections are separate optical fibres and said different wavelengths are chosen from an optical spectrum.

5. Method according to any of the preceding claims **characterized in that** at least part of the information transfer requests (ITR) by any of the secondary network nodes is attached to information (40, 42, 43) send by said secondary network node to the primary network node and **in that** at least part of the information transfer permits for any of the secondary network nodes is attached to information sent to said secondary network node by the primary network node.

6. Method according to any of the preceding claims **characterized in that** the network controller is capable of interrogating at least some of the network nodes for information transfer requests and **in that** such an information transfer request is sent to the controller upon interrogation.

7. Method according to any of the preceding claims **characterized in that** the network controller comprises at least one generator (12, 13, 14, 52) being associated with at least one network node, **in that** said generator is capable of periodically producing information transfer permits and **in that** said information transfer permits are issued to said at least one network node.

8. Method according to claim 7 **characterized in that** the network controller (10) comprises a plurality of generators (52), everyone of said generators being associated with at least one network node.

9. Method according to any of the preceding claim **characterized in that** the information is segmented in quantified information cells (40) of fixed size and **in that** the network nodes are allowed to send one information cell for each permit.

10. Method according to claim 9 **characterized in that** the information cells to be transferred from one network node to another network node are placed in a buffer (21) associated with said one network node (2) and **in that** said one network node communicates the length (43) of said buffer (21) by means of a transfer request to the network controller.

11. Method according to any of the preceding claims **characterized in that** the primary network node (1) is integrated with the network controller (10) such that the submission of an information transfer permits to said primary node (1) by said controller (10) is directly associated with the transferring of the permitted information by said primary node.

12. Method according to any of the preceding claims **characterized in that that** the secondary network nodes (2) are permitted to transfer an amount of information only over a connection path that is uniquely associated with the connection path used for issuing the corresponding information transfer permit.

13. Method according to any of the preceding claims **characterized in that** delay means arc associated with at least a plurality of secondary network nodes (2) and **in that** information is sent from such a secondary network node (2) taking into account a delay time set by the delay means, the delay times associated with different secondary network nodes being tuned to one another such that a time of sending information is at least substantially synchronized among the other secondary network nodes.

14. Method according to claim 13 **characterized in that** delay times for said delay means are calculated by the network controller and send back to a secondary network node during an initial set up of a connection between a secondary network node (2) and the primary network node (1).

15. Method according to any of the preceding claims **characterized in that** the network controller (10) is capable of issuing information transfer permits to the network nodes in accordance with bandwidth reservations for said network nodes issued by a further network entity.

16. Method according to claim 15 **characterized in that** amounts of information to be transferred between a secondary network node (2) and the primary network node (1) are placed in a first and a second buffer associated with the sending network node, **in that** amounts of information for which no bandwidth is reserved are placed in said first buffer, **in that** amounts of information for which bandwidth is reserved are placed in said second buffer, **in that** the sending network node communicates the identity of the appropriate one of said first and second buffer to the network controller by means of a transfer request, and **in that** the network controller is capable of differentiating while issuing permits for said first and second buffer.

17. Method according to claim 16 **characterized in that** amounts of information to be send by the primary network node (1) to a multitude of secondary network nodes (2) are divided over a common first and second buffer associated with said multitude of secondary network nodes.

18. Method according to any of the preceding claims **characterised in that** amounts of information to be transferred from the primary network node (1) to an unspecified secondary network node (2) are placed in at least one buffer associated with said unspecified node and **in that** the primary network node communicates the contents of said buffer to the network controller by means of an information transfer request.

19. Information network operated according to the method of any of claims 1-18.

## Patentansprüche

1. Verfahren zum Steuern des Zugangs in einem Informationsnetzwerk, in welchem ein primärer Netzwerkknoten (1) an eine Mehrzahl von sekundären Netzwerkknoten (2) über ein Medium (3) angeschlossen ist, welches von den sekundären Netzwerkknoten gemeinsam benutzt wird, wobei zwischen dem primären Netzwerkknoten und den sekundären Netzwerkknoten Informationen ausgetauscht werden, wobei die sekundären Netzwerkknoten fähig sind, Informationsübertragungsanforderungen (ITR) an eine Netzwerksteuervorrichtung (10) für die Übertragung einer Menge von Informationen an den primären Netzwerkknoten zu senden, und wobei die Netzwerksteuervorrichtung fähig ist, Informationsübertragungsgenehmigungen (ITP) an die sekundären Netzwerkknoten auszugeben, welche den sekundären Netzwerkknoten genehmigen, Informationen an den primären Netzwerkknoten zu senden, in welchem die Mengen von von den sekundären Netzwerkknoten zu sendenden Informationen in dem Zeitbereich und mindestens einem weiteren Bereich verteilt werden, wobei das gemeinsam benutzte Medium (3) als eine Anzahl von unabhängigen Verbindungspfaden zwischen den sekundären Netzwerkknoten und dem primären Netzwerkknoten, welcher dem besagten mindestens einen weiteren Bereich entspricht, dargestellt wird, wobei die Netzwerksteuervorrichtung jede Übertragungsgenehmigung (ITP) mit einem einzigen innerhalb des besagten gemeinsam benutzten Mediums verfügbaren Verbindungspfad assoziiert, und wobei es den sekundären Netzwerkknoten erlaubt ist, eine Menge von Informationen nur nach Empfang einer Informationsübertragungsgenehmigung und lediglich über den besagten der besagten Genehmigung zugeordneten einzigen Verbindungspfad zu senden, **dadurch gekennzeichnet, dass**
der primäre Netzwerkknoten (1) die Netzwerksteuervorrichtung umfasst, die unabhängigen Verbindungspfade in dem Zeitbereich und dem besagten mindestens einen weiteren Bereich in der Netzwerksteuervorrichtung (10) für einen jeden der besagten Mehrzahl von sekundären Knoten (2) definiert werden, und
in der Netzwerksteuervorrichtung (10) die Informationsübertragungsgenehmigungen (ITP) in Verteilungsmittel (13,14) eingespeist werden, welche die Genehmigungen über verfügbare Puffereingänge in einem mehrdimensionalen FIFO-Puffer (11), welcher über eine Dimension für jeden Bereich, in welchem die Informationen verteilt werden können, verfügt, verteilen, und
die Verteilungsmittel (13, 14) mit Informationen über verfügbare Verbindungspfade zwischen dem primären Netzwerkknoten und jedem sekundären Netzwerkknoten versorgt werden und die Puffereingänge des FIFO-Puffers (11) entsprechend abbilden, bevor die Genehmigungen (ITP) über die verfügbaren Puffereingänge des besagten FIFO-Puffers verteilt werden.

2. Verfahren nach Anspruch 1, **dadurch gekennzeichnet, dass** der primäre Netzwerkknoten (1) fähig ist, Informationsübertragungsanforderungen an die Netzwerksteuervorrichtung (10) zu senden, um Mengen von Informationen an die sekundären Netzwerkknoten zu übertragen, und dass die Netzwerksteuervorrichtung (10) fähig ist, Informationsübertragungsgenehmigungen an den primären Netzwerkknoten (1) auszugeben, um es dem primären Netzwerkknoten zu erlauben, die besagte Menge von Informationen nur nach Empfang einer solchen Informationsübertragungsgenehmigung und lediglich über einen der besagten Genehmigung zugeordneten einzigen Verbindungspfad an die sekundären Netzwerkknoten (2) zu senden.

3. Verfahren nach Anspruch 1 oder 2, **dadurch gekennzeichnet, dass** sich der besagte mindestens eine weitere Bereich in mindestens entweder separaten physischen Verbindungen, orthogonalen Frequenzen oder verschiedenen Wellenlängen befindet.

4. Verfahren nach Anspruch 3, **dadurch gekennzeichnet, dass** das besagte Netzwerk ein optisches Netzwerk ist, und dass die besagten Verbindungen separate optische Fasern sind, und dass die besagten verschiedenen Wellenlängen aus einem optischen Spektrum gewählt werden.

5. Verfahren nach einem beliebigen der vorstehenden Ansprüche, **dadurch gekennzeichnet, dass** mindestens ein Teil der Informationsübertragungsanforderungen (ITR) von einem beliebigen der sekundären Netzwerkknoten an von dem besagten sekundären Netzwerkknoten an den primären Netzwerkknoten gesendete Informationen (40, 42, 43) angehängt wird, und dass mindestens ein Teil der Informationsübertragungsgenehmigungen für einen beliebigen der sekundären Netzwerkknoten an von dem primären Netzwerkknoten an den besagten sekundären Netzwerkknoten gesendete Informationen angehängt wird.

6. Verfahren nach einem beliebigen der vorstehenden Ansprüche, **dadurch gekennzeichnet, dass** die Netzwerksteuervorrichtung fähig ist, mindestens einige der Netzwerkknoten in Bezug auf Informationsübertragungsanforderungen abzufragen, und dass eine solche Informationsübertragungsanforderung auf Abfrage an die Steuervorrichtung gesendet wird.

7. Verfahren nach einem beliebigen der vorstehenden Ansprüche, **dadurch gekennzeichnet, dass** die Netzwerksteuervorrichtung mindestens einen Generator (12, 13, 14, 52) umfasst, welcher mindestens einem Netzwerkknoten zugeordnet ist, und dass der besagte Generator fähig ist, periodisch Informationsübertragungsgenehmigungen zu erzeugen, und dass die besagten Informationsübertragungsgenehmigungen an den besagten mindestens einen Netzwerkknoten ausgegeben werden.

8. Verfahren nach Anspruch 7, **dadurch gekennzeichnet, dass** die Netzwerksteuervorrichtung (10) eine Mehrzahl von Generatoren (52) umfasst, wobei ein jeder der besagten Generatoren mindestens einem Netzwerkknoten zugeordnet wird.

9. Verfahren nach einem beliebigen der vorstehenden Ansprüche, **dadurch gekennzeichnet, dass** die Informationen in quantifizierte Informationszellen (40) festgelegter Größe segmentiert werden, und dass es den Netzwerkknoten erlaubt ist, eine Informationszelle für jede Genehmigung zu senden.

10. Verfahren nach Anspruch 9, **dadurch gekennzeichnet, dass** die von einem Netzwerkknoten an einen anderen Netzwerkknoten zu übertragenden Informationszellen in einem dem besagten einen Netzwerkknoten (2) zugeordneten Puffer (21) gespeichert werden, und dass der besagte eine Netzwerkknoten die Länge (43) des besagten Puffers anhand einer Übertragungsanforderung an die Netzwerksteuervorrichtung übermittelt.

11. Verfahren nach einem beliebigen der vorstehenden Ansprüche, **dadurch gekennzeichnet, dass** der primäre Netzwerkknoten (1) in der Netzwerksteuervorrichtung (10) integriert ist, so dass die Beantragung einer Informationsübertragungsgenehmigung durch die besagte Steuervorrichtung (10) an den besagten primären Knoten (1) direkt mit der Übertragung der erlaubten Informationen durch den besagten primären Knoten assoziiert ist.

12. Verfahren nach einem beliebigen der vorstehenden Ansprüche, **dadurch gekennzeichnet, dass** es den sekundären Netzwerkknoten (2) erlaubt ist, eine Menge von Informationen nur über einen Verbindungspfad zu übertragen, welcher ausschließlich mit dem für die Ausgabe der entsprechenden Informationsübertragungsgenehmigung verwendeten Verbindungspfad assoziiert ist.

13. Verfahren nach einem beliebigen der vorstehenden Ansprüche, **dadurch gekennzeichnet, dass** mindestens einer Mehrzahl von sekundären Netzwerkknoten (2) Verzögerungsmittel zugeordnet werden, und dass Informationen von einem solchen sekundären Netzwerkknoten (2) unter Berücksichtigung einer von den Verzögerungsmitteln festgelegten Verzögerungszeit gesendet werden, wobei die mit verschiedenen sekundären Netzwerkknoten assoziierten Verzögerungszeiten derart untereinander abgestimmt werden, dass eine Sendezeit von Informationen mindestens im Wesentlichen unter den anderen sekundären Netzwerkknoten synchronisiert sind.

14. Verfahren nach Anspruch 13, **dadurch gekennzeichnet, dass** die Verzögerungszeiten für die besagten Verzögerungsmittel von der Netzwerksteuervorrichtung berechnet und während eines ersten Aufbaus einer Verbindung zwischen einem sekundären Netzwerkknoten (2) und dem primären Netzwerkknoten (1) an einen sekundären Netzwerkknoten zurückgesendet werden.

15. Verfahren nach einem beliebigen der vorstehenden Ansprüche, **dadurch gekennzeichnet, dass** die Netzwerksteuervorrichtung (10) fähig ist, Informationsübertragungsgenehmigungen gemäß den von einer weiteren Netzwerkentität ausgegebenen Bandbreitenreservierungen für die besagten Netzwerkknoten an die Netzwerkknoten auszugeben.

16. Verfahren nach Anspruch 15, **dadurch gekennzeichnet, dass** die zwischen einem sekundären Netzwerkknoten (2) und dem primären Netzwerkknoten (1) zu übertragenden Mengen von Informationen in einem ersten und einem zweiten Puffer, welche dem sendenden Netzwerkknoten zugeordnet sind, gespeichert werden, und dass die Mengen von Informationen, für welche keine Bandbreite reserviert ist, in dem besagten ersten Puffer gespeichert werden, und dass die Mengen, für welche eine Bandbreite reserviert ist, in dem besagten zweiten Puffer gespeichert werden, und dass der sendende Netzwerkknoten die Identität des entsprechenden entweder ersten oder zweiten Puffers anhand einer Übertragungsanforderung an die Netzwerksteuervorrichtung übermittelt, und dass die Netzwerksteuervorrichtung fähig ist, diese während der Ausgabe von Genehmigungen für den besagten ersten und den besagten zweiten Puffer zu differenzieren.

17. Verfahren nach Anspruch 16, **dadurch gekennzeichnet, dass** die Mengen der von dem primären Netzwerkknoten (1) an eine Vielzahl von sekundären Netzwerkknoten (2) zu sendenden Informationen über einen der besagten Vielzahl von sekundären Netzwerkknoten zugeordneten gemeinsam benutzten ersten und zweiten Puffer geteilt werden.

18. Verfahren nach einem beliebigen der vorstehenden Ansprüche, **dadurch gekennzeichnet, dass** die Mengen der von dem primären Netzwerkknoten (1) an einen nicht spezifizierten sekundären Netzwerkknoten (2) zu übertragenden Informationen in mindestens einem dem besagten nicht spezifizierten Knoten zugeordneten Puffer gespeichert werden, und dass der primäre Netzwerkknoten die Inhalte des besagten Puffers anhand einer Informationsübertragungsgenehmigung an die Netzwerksteuervorrichtung übermittelt.

19. Informationsnetzwerk, betrieben gemäß dem Verfahren nach einem beliebigen der Ansprüche 1-18.

## Revendications

1. Procédé de contrôle d'accès dans un réseau d'information dans lequel un noeud de réseau primaire (1) est connecté à une pluralité de noeuds de réseau secondaires (2) par le biais d'un support (3) qui est partagé entre les noeuds de réseau secondaires, des informations étant échangées entre le noeud de réseau primaire et les noeuds de réseau secondaires, les noeuds de réseau secondaires étant capables d'envoyer des demandes de transfert d'informations (ITR) à un contrôleur de réseau (10) pour transférer un volume d'informations au noeud de réseau primaire, et le contrôleur de réseau étant capable de délivrer des permis de transfert d'informations (ITP) aux noeuds de réseau secondaires pour autoriser les noeuds de réseau secondaires à envoyer des informations au noeud de réseau primaire dans lequel le volume d'informations à envoyer par les noeuds de réseau secondaires est distribué dans le domaine temporel et au moins un domaine supplémentaire, en ce que le support partagé (3) est représenté sous la forme d'une pluralité de trajets de connexion indépendants entre les noeuds de réseau secondaires et le noeud de réseau primaire correspondant audit au moins un domaine supplémentaire, en ce que le contrôleur de réseau associe chaque permis de transfert (ITP) à un trajet de connexion unique disponible à l'intérieur dudit support partagé, et en ce que les noeuds de réseau secondaires n'ont l'autorisation d'envoyer un volume d'informations qu'après avoir reçu un permis de transfert d'informations et seulement sur ledit trajet de connexion unique associé audit permis, **caractérisé en ce que**
le noeud de réseau primaire (1) comprend le contrôleur de réseau,
les trajets de connexion indépendants sont définis dans le domaine temporel et ledit au moins un domaine supplémentaire dans le contrôleur de réseau (10) pour chacun de ladite pluralité de noeuds secondaires (2), et
dans le contrôleur de réseau (10), les permis de transfert d'informations (ITP) sont acheminés à des moyens de distribution (13, 14) qui distribuent les permis sur les entrées de tampon disponibles dans un tampon FIFO (11) multidimensionnel qui possède une dimension pour chaque domaine dans lequel les informations peuvent être distribuées, et
les moyens de distribution (13, 14) reçoivent des informations sur les trajets de connexion disponibles entre le noeud de réseau primaire et chaque noeud de réseau secondaire et établissent la correspondance entre les entrées de tampon du tampon FIFO (11) en conséquence, avant de distribuer les permis (ITP) sur les entrées de tampon disponibles dudit tampon FIFO.

2. Procédé selon la revendication 1, **caractérisé en ce que** le noeud de réseau primaire (1) est capable d'envoyer des demandes de transfert d'informations au contrôleur de réseau (10) pour transférer des volumes d'informations aux noeuds de réseau secondaire et **en ce que** le contrôleur de réseau (10) est capable de délivrer des permis de transfert d'informations au noeud de réseau primaire (1), autorisant le noeud de réseau primaire à envoyer lesdits volumes d'informations aux noeuds de réseau secondaires (2) uniquement sur réception d'un tel permis de transfert d'informations et seulement sur un trajet de connexion unique associé audit permis.

3. Procédé selon la revendication 1 ou 2, **caractérisé en ce que** ledit au moins un domaine supplémentaire réside dans au moins une parmi des connexions physiques séparées, des fréquences orthogonales et des longueurs d'onde différentes.

4. Procédé selon la revendication 3, **caractérisé en ce que** ledit réseau est un réseau optique et **en ce que** lesdites connexions sont des fibres optiques séparées et lesdites longueurs d'onde différentes sont choisies dans un spectre optique.

5. Procédé selon l'une quelconque des revendications précédentes, **caractérisé en ce qu'**au moins une partie des demandes de transfert d'informations (ITR) par l'un quelconque des noeuds secondaires est attachée aux informations (40, 42, 43) envoyées par ledit noeud de réseau secondaire au noeud de réseau primaire et **en ce qu'**au moins une partie des permis de transfert d'informations pour l'un quelconque des noeuds de réseau secondaires est attachée aux informations envoyées audit noeud de réseau secondaire par le noeud de réseau primaire.

6. Procédé selon l'une quelconque des revendications précédentes, **caractérisé en ce que** le contrôleur de réseau est capable d'interroger au moins certains des noeuds de réseau pour des demandes de transfert d'informations et **en ce qu'**une telle demande de transfert d'informations est envoyée au contrôleur lors de l'interrogation.

7. Procédé selon l'une quelconque des revendications précédentes, **caractérisé en ce que** le contrôleur de réseau comprend au moins un générateur (12, 13, 14, 52) qui est associé à au moins un noeud de réseau, **en ce que** ledit générateur est capable de produire périodiquement des permis de transfert d'informations et **en ce que** lesdits permis de transfert d'informations sont délivrés audit au moins un noeud de réseau.

8. Procédé selon la revendication 7, **caractérisé en ce que** le contrôleur de réseau (10) comprend une pluralité de générateurs (52), chacun desdits générateurs étant associé à au moins un noeud de réseau.

9. Procédé selon l'une quelconque des revendications précédentes, **caractérisé en ce que** les informations sont segmentées en cellules d'informations quantifiées (40) de taille fixe et **en ce que** les noeuds de réseau sont autorisés à envoyer une cellule d'informations pour chaque permis.

10. Procédé selon la revendication 9, **caractérisé en ce que** les cellules d'informations à transférer d'un noeud de réseau à un autre noeud de réseau sont placées dans un tampon (21) associé audit noeud de réseau (2) et **en ce que** ledit noeud de réseau communique la longueur (43) dudit tampon (21) au moyen d'une demande de transfert au contrôleur de réseau.

11. Procédé selon l'une quelconque des revendications précédentes, **caractérisé en ce que** le noeud de réseau primaire (1) est intégré avec le contrôleur de réseau (10) de telle sorte que la soumission d'un permis de transfert d'informations audit noeud primaire (1) par ledit contrôleur (10) est directement associée au transfert des informations autorisées par ledit noeud primaire.

12. Procédé selon l'une quelconque des revendications précédentes, **caractérisé en ce que** les noeuds de réseau secondaires (2) n'ont l'autorisation de transférer un volume d'informations que sur un trajet de connexion qui est associé exclusivement au trajet de connexion utilisé pour délivrer le permis de transfert d'informations correspondant.

13. Procédé selon l'une quelconque des revendications précédentes, **caractérisé en ce que** des moyens de retard sont associés à au moins une pluralité de noeuds de réseau secondaires (2) et **en ce que** les informations sont envoyées depuis un tel noeud de réseau secondaire (2) en tenant compte d'un temps de retard défini par les moyens de retard, les temps de retard associés à des noeuds de réseau secondaires différents étant accordés les uns aux autres de telle sorte qu'un moment d'envoi des informations est au moins sensiblement synchronisé parmi les autres noeuds de réseau secondaires.

14. Procédé selon la revendication 13, **caractérisé en ce que** les temps de retard pour lesdits moyens de retard sont calculés par le contrôleur de réseau et renvoyés à un noeud de réseau secondaire pendant l'établissement initial d'une connexion entre un noeud de réseau secondaire (2) et le noeud de réseau primaire (1).

15. Procédé selon l'une quelconque des revendications précédentes, **caractérisé en ce que** le contrôleur de réseau (10) est capable de délivrer des permis de transfert d'informations aux noeuds de réseau conformément à des réservations de largeur de bande pour lesdits noeuds de réseau émis par une autre entité de réseau.

16. Procédé selon la revendication 15, **caractérisé en ce que** les volumes d'informations à transférer entre un noeud de réseau secondaire (2) et le noeud de réseau primaire (1) sont placés dans un premier et un deuxième tampons associés au noeud de réseau émetteur, **en ce que** les volumes d'informations pour lesquels aucune largeur de bande n'est réservée sont placés dans ledit premier tampon, **en ce que** les volumes d'informations pour lesquels une largeur de bande est réservée sont placés dans ledit deuxième tampon, **en ce que** le noeud de réseau émetteur communique l'identité du tampon approprié parmi le premier et le deuxième au contrôleur de réseau au moyen d'une demande de transfert, et **en ce que** le contrôleur de réseau est capable de faire la différence au moment de délivrer des permis pour lesdits premier et deuxième tampons.

17. Procédé selon la revendication 15, **caractérisé en ce que** les volumes d'informations à envoyer par le noeud de réseau primaire (1) vers une pluralité de noeuds de réseau secondaires (2) sont divisés entre un premier et un deuxième tampons associés à ladite pluralité de noeuds de réseau secondaires.

18. Procédé selon l'une quelconque des revendications précédentes, **caractérisé en ce que** les volumes d'informations à transférer du noeud de réseau primaire (1) vers un noeud de réseau secondaire (2) non spécifié sont placés dans au moins un tampon associé audit noeud non spécifié et **en ce que** le noeud de réseau primaire communique le contenu dudit tampon au contrôleur de réseau au moyen d'une demande de transfert d'informations.

19. Réseau d'information exploité conformément au procédé selon l'une quelconque des revendications 1 à 18.
